Europäisches Patentamt

European Patent Office

Office européen des brevets

Veröffentlichungsnummer: **0 287 784**

**A2**

# EUROPÄISCHE PATENTANMELDUNG

Anmeldenummer: 88103108.2

Int. Cl.⁴ **B29C 65/74 , B29C 65/18**

Anmeldetag: 02.03.88

Priorität: **18.04.87 DE 8705710 U**

Veröffentlichungstag der Anmeldung:
**26.10.88 Patentblatt 88/43**

Benannte Vertragsstaaten:
**AT BE CH DE ES FR GB GR IT LI LU NL SE**

Anmelder: **ALKOR GMBH KUNSTSTOFFE**
**Morgensternstrasse 9 Postfach 71 01 09**
**D-8000 München 71(DE)**

Erfinder: **Fleischmann, Edgar, Dipl.-Ing.**
**Samlandstrasse 29**
**D-8000 München 82(DE)**
Erfinder: **Mayr, Maximilian, Dipl.-Ing.**
**Frank-Caro-Strasse 63**
**D-8268 Garching/Alz(DE)**
Erfinder: **Heitz, Heinrich, Dr.**
**Jägerweg 11**
**D-8034 Germering(DE)**

Vertreter: **Seiler, Siegfried**
**c/o DEUTSCHE SOLVAY-WERKE GmbH**
**Langhansstrasse 6 Postfach 11 02 70**
**D-5650 Solingen 11(DE)**

**Mit einer beheizten Kontaktfläche ausgestattete Vorrichtung zum Verschweissen von Kunststofffolien, -bahnen und/oder zuschnitten.**

Die vorliegende Erfindung betrifft eine mit einer beheizten Kontaktfläche ausgestatte Vorrichtung zum Verschweißen von Kunststoffolien (sowie gegebenenfalls Hilfs-und/oder Zusatzvorrichtungen, wobei die Verschweißvorrichtung eine Schweißpresse ist, die aus mindestens einer Kunststoffschweißelektrode und aus mindestens einer Gegendruckelektrode, besteht. Die Schweißelektrode und/oder die Gegendruckelektrode weist eine spitze oder messerähnliche Schneidkante auf und ist mittelbar oder unmittelbar beweglich angeordnet oder gelagert. Die spitze Schneidkante ist mit einem in einem spitzen Winkel angeordneten oder abgeschrägten Schweißprofil, vorzugsweise gegenüber der Schneidkante zurückspringend angeordneten Schweißprofil kombiniert. Zwischen der Schweißpresse ist ein feststehendes Trennband, Trenngitter, Trenngewebe oder Trenngewirke, vorzugsweise aus nicht wärmeleitendem Material, angeordnet. Die Gegenelektrode oder das Gegenwerkzeug weisen Profilierungen und die Elektrode die Schneidkante und/oder das Schweißprofil auf.

Die vorliegende Erfindung betrifft eine mit einer beheizten Kontaktfläche ausgestatte Vorrichtung zum Verschweißen von Kunststoffolien, -bahnen und oder -zuschnitten sowie gegebenenfalls mit der Verschweißvorrichtung in Verbindung oder Kombination stehenden Hilfs-und oder Zusatzvorrichtungen, wobei die Verschweißvorrichtung eine Schweißpresse ist, die aus mindestens einer Kunststoffschweißelektrode und aus mindestens einer Gegendruckplatte, -leiste oder -schiene, vorzugsweise einer Gegendruckelektrode, besteht. Die Schweißelektrode und/oder die Gegendruckelektrode, ist bzw. sind mittelbar oder unmittelbar beweglich angeordnet oder gelagert und die spitze oder messerähnliche Schneidkante ist mit einem in einem spitzen Winkel angeordneten oder abgeschrägten Schweißprofil, vorzugsweise gegenüber der Schneidkante zurückspringend angeordneten und/oder mit mindestens einer Stufe oder Ausnehmung versehenen zurückspringend angeordneten Schweißprofil kombiniert oder versehen, wobei die Kunststoffschweißelektrode und/oder die spitze oder messerähnliche Schneidkante vorzugsweise vertikal oder nahezu vertikal an der Schweißpresse und/oder zu der Gegendruckplatte und/oder zu den Kunststoffolien, -bahnen und/oder den -zuschnitten angeordnet ist. Gemäß der Erfindung ist zwischen der Schweißpresse ein feststehendes Trennband, Trenngitter, Trenngewebe oder Trenngewirke, vorzugsweise aus nicht wärmeleitendem Material, angeordnet.

Aus der bei Hinterlegung dieser Gebrauchsmusteranmeldung noch nicht veröffentlichten Patentanmeldung P 36 06 485 ist bereits ein mit einer beheizten Kontaktfläche ausgestatte Vorrichtung zum Verschweißen von Kunststoffolien, -bahnen und/oder -zuschnitten sowie gegebenenfalls mit der Verschweißvorrichtung in Verbindung oder Kombination stehenden Hilfs-und/oder Zusatzvorrichtungen bekannt, wobei die Verschweißvorrichtung eine Schweißpresse ist, die aus mindestens einer Kunststoffschweißelektrode und aus mindestens einer Gegendruckplatte, -leiste oder -schiene, vorzugsweise einer Gegendruckelektrode, besteht, daß die Schweißelektrode und/oder die Gegendruckelektrode eine spitze oder messerähnliche Schneidkante aufweist, daß die Schweißelektrode und/oder die Gegendruckplatte, -leiste oder -schiene, vorzugsweise die Gegenelektrode, mittelbar oder unmittelbar beweglich angeordnet oder gelagert ist bzw. sind und die spitze oder messerähnliche Schneidkante mit einem in einem spitzen Winkel angeordneten oder abgeschrägten Schweißprofil, vorzugsweise gegenüber der Schneidkante zurückspringend angeordneten und/oder mit mindestens einer Stufe oder Ausnehmung versehenen zurückspringend angeordneten Schweißprofil kombiniert oder versehen ist, wobei die Kunststoffschweißelektrode und oder die spitze oder messerähnliche Schneidkante vorzugsweise vertikal oder nahezu vertikal an der Schweißpresse und oder zu der Gegendruckplatte und oder zu den Kunststoffolien, -bahnen und oder den -zuschnitten angeordnet ist. Diese Vorrichtung besitzt bei der Verwendung eines Transportbandes, das zwischen der Schweißpresse geführt wird, u. a. den Nachteil, daß sich das Transportband an unterschiedlichen Stellen unterschiedlich stark abnutzt und in relativ kurzer Zeit erneuert werden muß, obgleich bestimmte Stellen des Transportbandes noch keine wesentlichen Abnutzungserscheinungen aufweisen.

Ziel und Aufgabe der vorliegenden Erfindung war es daher die genannten Vorrichtung zu verbessern.

Erfindungsgemäß wurde festgestellt, daß diesen Zielen und Aufgaben eine mit einer beheizten Kontaktfläche ausgestatte Vorrichtung zum Verschweißen von Kunststoffolien, -bahnen und oder -zuschnitten sowie gegebenenfalls mit der Verschweißvorrichtung in Verbindung oder Kombination stehenden Hilfs-und/oder Zusatzvorrichtungen gerecht wird, wobei die Verschweißvorrichtung eine Schweißpresse ist, die aus mindestens einer Kunststoffschweißelektrode und aus mindestens einer Gegendruckplatte, -leiste oder -schiene, vorzugsweise einer Gegendruckelektrode, besteht, daß die Schweißelektrode und/oder die Gegendruckelektrode eine spitze oder messerähnliche Schneidkante aufweist, daß die Schweißelektrode und oder die Gegendruckplatte, -leiste oder -schiene, vorzugsweise die Gegenelektrode, mittelbar oder unmittelbar beweglich angeordnet oder gelagert ist bzw. sind und die spitze oder messerähnliche Schneidkante mit einem in einem spitzen Winkel angeordneten oder abgeschrägten Schweißprofil, vorzugsweise gegenüber der Schneidkante zurückspringend angeordneten und/oder mit mindestens einer Stufe oder Ausnehmung versehenen zurückspringend angeordneten Schweißprofil kombiniert oder versehen ist, wobei die Kunststoffschweißelektrode und/oder die spitze oder messerähnliche Schneidkante vorzugsweise vertikal oder nahezu vertikal an der Schweißpresse und/oder zu der Gegendruckplatte und/oder zu den Kunststoffolien, -bahnen und/oder den -zuschnitten angeordnet ist. Gemäß der Erfindung ist zwischen der Schweißpresse ein feststehendes Trennband, Trenngitter, Trenngewebe oder Trenngewirke, vorzugsweise aus nicht wärmeleitendem Material, angeordnet.

Nach einer bevorzugten Ausführungsform der Erfindung weist dabei die Gegenelektrode oder das Gegenwerkzeug Profilierungen, vorzugsweise Nuten, Rillen und oder vorspringende Kanten oder Erhebungen, und die Elektrode die Schneidkante und oder das Schweißprofil auf. Bei dieser Ausführungsform erfolgt eine bessere Zusammenpressung im Bereich der Schweißlinie.

Gemäß der Erfindung ist das feststehende oder festeingespannte Trennband, Trenngitter, Trenngewebe oder Trenngewirke an einer Walze abwickelbar angeordnet, so daß bei Abnutzung des Trennbandes eine Abwicklung bzw. Weiterführung der beaufschlagten bzw. abgenutzten Stelle erfolgt, wobei das Trennband nicht als Transportband dient oder sogar in Gegenrichtung geführt werden kann. Eine optimalere Ausnutzung oder Abnutzung des Trennbandes, Trenngitters, Trenngewebes oder Gemisches ist dadurch gegeben. Eine Abwickelvorrichtung für das abgenutzte Trennband, Trenngitter, Trenngewebe oder Trenngewirke ist vorzugsweise an der Vorrichtung angeordnet.

Walzen, Zylinder oder ähnliche Vorrichtungen und/oder die Auf-und/oder Abwickelvorrichtung sind dabei als Spann-und/oder Festhaltevorrichtung für das zwischen Elektrode und Gegenelektrode gespannte feststehende Trennband, Trenngitter, Trenngewebe oder Trenngewirke angeordnet.

Nach einer bevorzugten Ausführungsform der Vorrichtung ist mindestens eine Nut oder Rille (gemessen oder berechnet bei geschlossenem Werkzeug) in lotrechter Richtung gegenüber der Schneidkante und/oder der Schweißpresse angeordnet. Bei dieser Ausführungsform kann u. a. die Abnutzung der Schneidkante vermindert werden.

Die in der Gegenelektrode oder im Gegenwerkzeug angeordnete Nuten oder Rillen oder Vertiefungen weisen einen Abstand (gemessen von der Oberfläche der Gegenelektrode oder des Gegenwerkzeuges bis zur Nut-oder Rillentiefe als senkrechter Abstand von der Oberfläche) 0,1 bis 30 $\mu$m, vorzugsweise 0,5 bis 15 $\mu$m, auf.

Nach einer anderen Ausführungsform ist mindestens eine Nut oder Rille in der Gegenelektrode oder im Gegenwerkzeug in lotrechter Richtung (berechnet bei geschlossenem Werkzeug) gegenüber dem zurückspringend angeodneten Schweißprofil angeordnet.

Die Form der Schweißelektrode der Schweißpresse wird nach einer bevorzugten Ausführungsform des erfindungsgemäßen Verfahren in Abhängigkeit von der Gesamtdicke der flächig aufeinanderliegenden Kunststoffolien, -bahnen und/oder -zuschnitte so ausgewählt, daß der senkrechte Abstand ($\Delta$h) des Schweißprofiles der Schweißelektrode von der spitzen oder messerähnlichen Schneidkante 75 - 35 %, vorzugsweise 65 - 40 %, der Gesamtdicke der flächig aufeinanderliegenden zu verschweißenden Kunststoffolien, -bahnen und/oder -zuschnitte beträgt. Weiterhin erfolgt eine zusätzliche Beheizung von der, der Schweißelektrode gegenüberliegenden Fläche her oder durch die beheizte Gegenplatte oder Gegenelektrode.

Die Schließ-und/oder Hubbewegung der Schweißpresse, vorzugsweise der mit einer spitzen oder messerähnlichen Schneidkante und einem zurückspringend angeordne ten Schweißprofil versehenen, auf der Platte angeordneten Schweißelektrode erfolgt nach einer vorzugsweisen Ausführungsform durch Computersteuerung und/oder elektronische Steuerung. Die spitze oder messerähnliche Schneidkante wird dabei vertikal oder nahezu vertikal zu den Kunststoffolien, -bahnen und/oder -zuschnitten beim Trennahtverschweißen geführt.

Die Schweißpresse besteht somit nach einer bevorzugten Ausführungsform aus einer beheizten Hubplatte (Oberheizung) und einer beheizten Gegenelektrode oder beheizten Tischplatte (Unterheizung) zur Aufnahme des Ober-und Unterwerkzeugs. Die Schweißpresse ist durch einen Computer-gesteuerten Linearverstärker in der Lage, auf hundertstel Millimeter genau zu arbeiten. Durch dieses hohe Maß an Präzision kann man die Einsinktiefe des Oberwerkzeuges exakt einstellen und ein Beschädigen des Transportbandes vermeiden.

Durch die Computersteuerung und/oder elektronische Steuerung und die Wahl der Schweißelektrode (mit Schneidkante und Schweißprofil) werden materialverdünnte Stellen oder Linien (Sollbruchstellen) bei der Wärmekontakttrennahtverschweißung mit einer gleichmäßigen Materialdicke erhalten, deren Standardabweichung oder Toleranz (gemessen über den gesamten Bereich der Trennahtverschweißung) in der Sollbruchstelle weniger als 25 %, vorzugsweise weniger als 10 %, beträgt.

Die erfindungsgemäße Vorrichtung erlaubt auch das Trennahtverschweißen u. a. von Polyolefinfolien sowie die Einhaltung hoher Taktzahlen bzw. höherer Maschinengeschwindigkeiten und somit eine vergrößerte Produktionsleistung. Sowohl die spitze oder die messerähnliche Schneidkante als auch das dahinter angeordnete, (bezogen auf die Bewegungsrichtung der Kunststoffolie oder des Transportbandes in Transportrichtung angeordnete) zurückspringende Schweißprofil, vorzugseise einstufig zurückspringende Schweißprofil, sind beheizt. Je nach Dicke und Art des Schweißgutes kann die spitze oder messerähnliche Schweißkante eine gewisse Abstumpfung an der Kante aufweisen oder messerähnlich sein.

Nach einer bevorzugten Ausführungsvorm wird eine Kunststoffolie oder -bahn von einer Rolle oder einem Stapel her der Wärmekontaktschweißpresse zugeführt. Vor der Wärmekontaktschweißpresse werden vorzugsweise die zu verschweißenden Kunststoffolienzuschnitte auf oder an der Kunststoffolie oder -bahn lose befestigt oder angeheftet.

Nach einer vorteilhaften Ausführungsform werden die Kunststoffolien oder -bahnen mit den trennaht-und/oder wärmekontaktverschweißten Artikeln oder Zuschnitten, die über die Sollbruchstellen mit dem Abfallgitter in Verbindung stehen, durch ein Messer oder eine ähnliche Trennvorrichtung in einzelne Folienabschnitte von einer Länge von 100 - 1000 mm, vorzugsweise 200 -700 mm und eine Breite von 200 - 2000 mm, vorzugsweise 500 - 1200 mm geschnitten bzw. getrennt und erst nachfolgend die verschweißten Kunststoffartikel vom Abfallgitter getrennt.

Unmittelbar nach der Wärmekontakttrennnahtverschweißung werden nach der Weiterbewegung oder dem Weitertransport die verschweißten Kunststoffolien, -bahnen und/oder -zuschnitte einer Kontakt-und/oder Preßkühlung unterworfen.

Die flächig aufeinanderliegenden Kunststoffolien, -bahnen und/oder -zuschnitte werden während der Wärmekontakttrennnahtverschweißung durch das Schweißprofil und die federnd angeordnete Andrückplatte zusammengedrückt, aneinandergedrückt und/oder festgehalten, so daß eine Rutsch- oder Gleitbewegung des Kunststoffmaterials zum Zeitpunkt der Wärmekontakttrennnahtverschweißung verhindert wird.

Nach einer bevorzugten Ausführungsform des erfindungsgemäßen Verfahrens ist das zwischen der Schweißpresse feststehende Kunststofftrennband nicht wärmeleitend. Bevorzugt werden sowohl die Schweißelektrode (gemessen an der Schneidkante oder am Schweißprofil) als auch die Gegenplatte oder Gegenelektrode beheizt. Dabei wird jedes Werkzeug der Schweißpresse für sich (Oberwerkzeug und Unterwerkzeug bzw. Schweißelektrode und Gegenelektrode) auf Temperaturen über 380 K aufgeheizt.

Die Verschweißung erfolgt bei einer Temperatur der Schweißelektrode (gemessen an der Schneidkante und/oder am Schweißprofil), vorzugsweise verwendet als Oberwerkzeug, von 383 K bis 445 K, vorzugsweise 403 K bis 433 K und/oder oberhalb der Erweichungstemperatur der Kunststoffolie (gemessen nach Vicat B) und bei einer Temperatur der Gegenplatte oder der Gegenelektrode, vorzugsweise verwendet als Unterwerkzeug, bei Temperaturen von 450 K bis 525 K, vorzugsweise 473 K bis 510 K. Bei einer anderen bevorzugten Ausführungsform liegt die Temperatur der Schweißelektrode sogar der Erweichungstemperatur der Kunststoffolie (gemessen nach Vicat A).

Die erfindungsgemäß verschweißten Kunststofffolienbahnen und/oder -zuschnitte, vorzugsweise flächig aufeinanderliegende Kunststoffolien, -bahnen und/oder -zuschnitte und daraus hergestellte Hüllen, Verpackungen und ähnliche Kunststoffartikel, die an mindestens einem Rand, vorzugsweise an mehreren Rändern miteinander verzugsweise an mehreren Rändern miteinander verschweißt sind und aus Olefinhomo- -co- -terpolymerisaten und/oder Polyolefinlegierungen zu mehr als 50 Gew. %, vorzugsweise mehr als 70 Gew. % bestehen oder diese enthalten, weisen mindestens einen Rand, vorzugsweise mehrere Ränder auf, der bzw. die trennaht-und wärmekontaktverschweißt ist bzw. sind. Die Kunststoffolienbahnen und/oder -zuschnitte besitzen unterschiedliche Härten, wobei der Härteunterschied zwischen einer Ober-und Unterfolienbahn und/oder -zuschnitt 5 - 20 Shore D, vorzugsweise 8 - 16 Shore D, beträgt.

Die verschweißten Ränder weisen erfindungsgemäß eine oder mehrere Profilierungen, vorzugsweise Längs-, Quer-und/oder Nahtstichprofilierungen oder Bördelkantenprofilierungen, auf. Es gelingt dadurch, schön verzierte Schweißränder bei den verschweißten Kunststoffartikeln zu erhalten, die z. B. eine Längs-, Quer-und/oder Nahtstichprofilierung oder andere Profilierungen besitzen. Eine Kunststofffolienbahn oder ein -zuschnitt ist dabei vorzugsweise opak oder farbstoff-bzw. farbpigmenthaltig und eine andere Kunststoffolienbahn oder ein anderer -zuschnitt transparent.

Die Schweißelektrode und die Gegenelektrode sind gemäß der Erfindung je auf einer Platte, Leiste oder Rahmen befestigt. Auf oder unter bzw. in mindestens einer Platte, Leiste oder dem Rahmen ist eine Heizvorrichtung oder beheizbare Vorrichtung angeordnet, so daß nach einer bevorzugten Ausführungsform nicht nur die Beheizung der Schweiß-und Gegenelektrode erfolgt, sondern auch eine Temperaturbehandlung des zu verschweißenden Materials in der Presse erzielt wird.

Die Platte, Leiste oder der Rahmen mit der darauf befestigten Schweißelektrode ist bevorzugt vertikal, annähernd vertikal oder radial zu der Kunststoffolienebene und/oder der gegenüberliegend angeordneten Platte, die die Gegenelektrode trägt, bewegbar angeordnet.

Zwischen den mit Schweißelektrode und Gegenelektrode ausgerüsteten Platten der Schweißpresse ist ein feststehendes Trennband, Trenngitter oder Trenngewebe parallel, annähernd parallel oder in einem Winkel zu den Platten von kleiner als 15°, vorzugsweise kleiner als 5°, angeordnet. Das eingesetzte Trennband ist somit weitgehend temperaturbeständig, insbesondere bis 773 K, vorzugsweis bis 523 K. Es weit eine Dicke unter 350 $\mu$m, vorzugsweise unter 150 $\mu$m, auf.

Auf den die Schweißelektrode und Gegenelektrode tragenden, mit mindestens einer Heizvorrichtung versehenen Platten der Schweißpresse ist eine Andrückplatte oder ein Andrückplattenteller (jeweils in Druckrichtung) federnd befestigt, der insbesondere zum Festhalten des zu verschweißenden Materials (Kunststoffolienbahn, -zuschnitt) dient.

Nach einer weiteren Ausführungsform sind seitlich vor der Schweißelektrode zusätzlich Rollen. Walzen, Bänder. Ketten oder Greifer angeordnet.

Die Wärmekontaktverschweißung wird mit dem Trennband mit einer Schweißelektrode und/oder Gegenplatte oder Gegenelektrode (Ober- und Unterwerkzeug) durchgeführt. die zweckmäßig eine hitzebeständige Antihaftbeschichtung besitzt. Vorzugsweise besteht diese Antihaftbeschichtung aus Fluorpolymeren und/oder Nickelschichten (durnicoatierte Schweißelektrode und/oder Gegegenelektrode).

Nach einer weiteren bevorzugten Ausführungsform weist die Gegenelektrode oder das Gegenwerkzeug Profilierungen, vorzugsweise Nuten, Rillen und/oder vorspringende Kanten oder Erhebungen und die Elektrode die Schneidkante mit Schweißprofil auf.

Nach einer bevorzugten Ausführungsform ist als Zusatzvorrichtung mindestens eine Schweiß- oder Heftstation für eine lose Befestigung, stellenweise Anschweißung oder Anheftung von Kunststoffolienzuschnitten auf einer Kunststoffolie oder -bahn vor der Schweißpresse angeordnet, wobei jedoch der eigentliche Verschweissungsvorgang in der Schweißpresse erfolgt.

Unmittelbar nach der Schweißpresse ist nach einer bevorzugten Ausführungsform eine Kühlvorrichtung, vorzugsweise Kühlpresse, angeordnet.

Die Schweißelektrode weist zwischen der spitzen oder messerähnlichen Schneidkante und dem zurückspringend angeordneten Schweißprofil eine nutähnliche Vertiefung auf. Die Schweißelektrode, die Schneidkante und das Schweißprofil bestehen bevorzugt aus Metall.

Das Schweißprofil ist zu der Platte oder Gegendruckplatte der Schweißpresse parallel, annähernd parallel oder in einem Winkel unter 20°, vorzugsweise unter 10°, angeordnet ist und/oder der Winkel zwischen der spitzen oder messerähnlichen Schneidkante und dem Schweißprofil beträgt 75 - 100 °, vorzugsweise ca. 90 °.

Nach einer weiteren bevorzugten Ausführungsform ist eine Kühlpreßplatte durch eine Bewegungsvorrichtung in Richtung der geöffneten Schweißpresse verschiebbar angeordnet. Nach der Ausschaltung der Vorrichtung befindet sich die Platte oder Kühlpreßplatte oder Kühlpresse, vorzugsweise die untere Platte der Kühlpresse, verschoben zwischen den Schweißpreßplatten parallel oder annähernd parallel zu diesen. Sie leitet die noch auf den Elektroden und Platten der Schweißpresse befindliche Wärme ab und verhindert eine zu starke Erhitzung des evtl. noch in der Kühlpresse angeordneten Kunststoffmaterials (Kunststoffolienbahn, -zuschnitte und dgl.).

Als Materialspender für Rollenware wurde nach einer Ausführungsform eine Folienabrollvorrichtung eingesetzt mit der Möglichkeit mehrere. vorzugsweise bis zu 3 Rollenbahnen übereinander und/oder mehrere Bahnen nebeneinander zugspannungsfrei an die Hauptmaschine einzugeben. und/oder einen Bogenanleger. der die Aufgabe hat. evtl. z. B. im Sieb- und Offsetdruckverfahren bedruckte Bogenware passergenau in die Hauptmaschine einzubringen. Die Bogenware wird in einer Anschweißstation an die Rollenware angeschweißt. Somit entsteht so ein Endlosband. Ein Maschinengestell nimmt die Antriebselemente. den Zangenvorschub und das Transportband auf.

In der Schweißpresse werden die auf einem temperaturbeständigen Transportband liegenden Polypropylenfolien oder Polyethylenfolien miteinander verschweißt. Da die Temperatur von außen durch die zu verschweißenden Folien dringen muß. ist je ein temperaturgeregeltes Ober- und Unterwerkzeug erforderlich.

Die Kühlstation dient dem starken Abkühlen des noch heißen Schweißgutes. Dieses Abkühlen ist für den einwandfreien Weitertransport und Querschnitt erforderlich. Von dem Abfallgitter können die geschweißten Kunststoffartikel mechanisch, pneumatisch und dgl., vorzugsweise durch Absaugen oder Pressen, entfernt bzw. getrennt werden.

Nach einer anderen Ausführungsform wird mit einem Querschneidmesser das zu einem Endlosband geschweißte Schweißgut in Bögen geschnitten. Diese Bögen werden mit Sauganlegern auf ein mit Ablagekassetten versehenes Förderband abgelegt und zur Abstapelung auf eine Palette weitertransportiert.

Das Antriebssystem besteht nach einer bevorzugten Ausführungsform im wesentlichen aus einem Hydraulikaggregat und einem reversierenden Hydraulikmotor, welcher die Transportzangen antreibt.

Bei dem erfindungsgemäßen Verfahren drückt das Schweißprofil, dessen Fläche vorzugsweise parallel oder annähernd parallel zur Kunststoffolienbahn ange ordnet ist, auf die zu verschweißende Kunststoffolie, während die Schneidkante, die die vorgenannte Temperatur oberhalb des Erweichungspunktes der Folie aufweist, den Trennahtschneid-Schweißvorgang durchführt. Durch das Andrücken des Schweißbandes entstehen fehlerfreie oder nahezu fehlerfreie Trennahtschweißnähte.

Das zwischen der Schweißelektrode und der Gegenelektrode befestigte Trennband, das auch nach anderen bevorzugten Ausführungsformen durch Walzen. Rollen und/oder Greifer ersetzt wird. besteht bevorzugt aus Kunststoffen. glasfaserverstärkten Kunststoffen oder Kunststoffmaterialien. die nicht wärmeleitend sind. So werden z. B. nicht Metallbänder oder metallisierte Kunststoffbänder eingesetzt, sondern Kunststoffbänder, vorzugsweise aus oder unter Mitverwendung von Fluorpolymeren, Polyimiden, glasfaserverstärkten Fluorpolymeren und dgl.

In der beigefügten Zeichnungen ist eine bevorzugte Ausführungsformen bzw. -beispiele der Erfindung schematisch dargestellt.

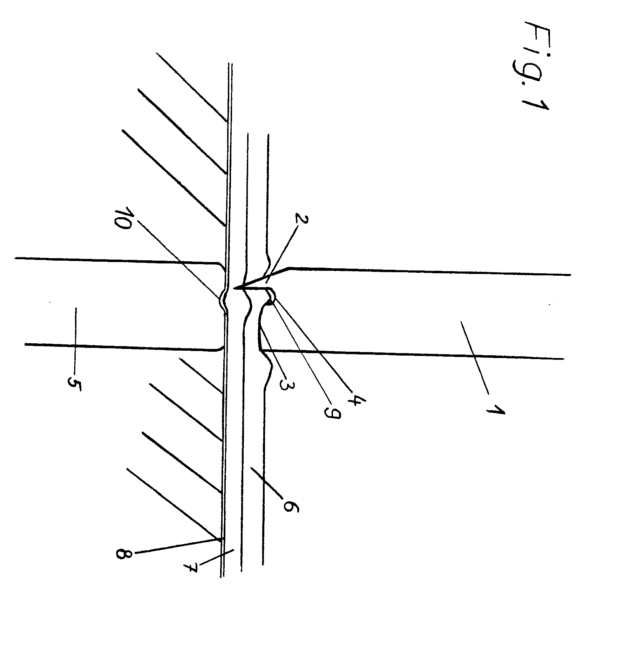

In Fig. 1 ist ein vertikaler Schnitt durch die Schweißelektrode der Schweißpresse schematisch dargestellt. Die vertikal angeordnete Schweißelektrode 1 ist mit der spitzen oder messerähnlichen Schweißkante 2 versehen, die einen Schneid-Schweißvorgang durchführt. An der Schweißelektrolde befindet sich weiterhin das gegeüber der Schneidkante zurückspringend angeordnete, mit einer Stufe versehene Schweißprofil 3, dessen Fläche vorzugsweise parallel oder annähernd parallel zur Kunststoffolienbahn und/oder zum Transportband und/oder zur Fläche der Gegenelektrode 5 ist.

Das Schweißprofil besitzt bevorzugt Kerbungen, Riffelungen oder andere Profilierungen. Auf dem feststehenden Trennband 8 ist ist die Kunststofffolienbahn 7 mit einem Kunststoffolienzuschnitt oder -zuschnitteil 6 angeordnet. An der Schweißelektrode 1 befindet sich die nutähnliche Vertiefung 4, in die bei dem Schweißvorgang etwas Kunsttoffmaterial des Randteiles zeitweise gedrückt wird. Das Gegenwerkzeug oder die Gegenelektrode weist die Profilierungen, vorzugsweise Nuten 10 auf.

## Ansprüche

1. Mit einer beheizten Kontaktfläche ausgestatte Vorrichtung zum Verschweißen von Kunststofffolien, -bahnen und/oder -zuschnitten sowie gegebenenfalls mit der Verschweißvorrichtung in Verbindung oder Kombination stehenden Hilfs- und/oder Zusatzvorrichtungen, wobei die Verschweißvorrichtung eine Schweißpresse ist, die aus mindestens einer Kunststoffschweißelektrode und aus mindestens einer Gegendruckplatte, -leiste oder -schiene, vorzugsweise einer Gegendruckelektrode, besteht, daß die Schweißelektrode und/oder die Gegendruckelektrode eine spitze oder messerähnliche Schneidkante aufweist, daß die Schweißelektrode und/oder die Gegendruckplatte, -leiste oder -schiene, vorzugsweise die Gegenelektrode, mittelbar oder unmittelbar beweglich angeordnet oder gelagert ist bzw. sind und die spitze oder messerähnliche Schneidkante mit einem in einem spitzen Winkel angeordneten oder abgeschrägten Schweißprofil, vorzugsweise gegenüber der Schneidkante zurückspringend angeordneten und/oder mit mindestens einer Stufe oder Ausnehmung versehenen zurückspringend angeordneten Schweißprofil kombiniert oder versehen ist, wobei die Kunststoffschweißelektrode und/oder die spitze oder messerähnliche Schneidkante vorzugsweise vertikal oder nahezu vertikal an der Schweißpresse und oder zu der Gegendruckplatte und oder zu den Kunststofffolien, -bahnen und/oder den -zuschnitten angeordnet ist, dadurch gekennzeichnet, daß zwischen der Schweißpresse ein feststehendes Trennband, Trenngitter, Trenngewebe oder Trenngewirke, vorzugsweise aus nicht wärmeleitendem Material, angeordnet ist, die Gegenelektrode oder das Gegenwerkzeug Profilierungen, vorzugsweise Nuten, Rillen und/oder vorspringende Kanten oder Erhebungen, und die Elektrode die Schneidkante und/oder das Schweißprofil aufweisen.

2. Vorrichtung nach Anspruch 1, dadurch gekennzeichnet, daß das feststehende oder festeingespannte Trennband, Trenngitter, Trenngewebe oder Trenngewirke an einer Walze abwickelbar angeordnet ist, so daß bei Abnutzung des Trennbandes eine Abwicklung bzw. Weiterführung der beaufschlagten bzw. abgenutzten Stelle erfolgt, wobei das Trennband nicht als Transportband dient.

3. Vorrichtung nach Ansprüchen 1 und 2, dadurch gekennzeichnet, daß eine Abwickelvorrichtung für das abgenutzte Trennband, Trenngitter, Trenngewebe oder Trenngewirke an der Vorrichtung angeordnet ist.

4. Vorrichtung nach einem oder mehreren der Ansprüche 1 bis 3, dadurch gekennzeichnet, daß Walzen, Zylinder oder ähnliche Vorrichtungen und/oder die Auf-und/oder Abwickelvorrichtung als Spann-und/oder Festhaltevorrichtung für das zwischen Elektrode und Gegenelektrode gespannte feststehende Trennband, Trenngitter, Trenngewebe oder Trenngewirke angeordnet sind.

5. Vorrichtung nach einem oder mehreren der Ansprüche 1 bis 4, dadurch gekennzeichnet, daß mindestens eine Nut oder Rille (gemessen oder berechnet bei geschlossenem Werkzeug) in lotrechter Richtung gegenüber der Schneidkante und/oder der Schweißpresse angeordnet ist.

6. Vorrichtung nach einem oder mehreren der Ansprüche 1 bis 5, dadurch gekennzeichnet, daß die in der Gegenelektrode oder im Gegenwerkzeug angeordnete Nuten oder Rillen oder Vertiefungen einen Abstand (gemessen von der Oberfläche der Gegenelektrode oder des Gegenwerkzeuges bis zur Nut-oder Rillentiefe als senkrechter Abstand von der Oberfläche)

0,1 bis 30 $\mu$m, vorzugsweise

0,5 bis 15 $\mu$m,

aufweist.

7. Vorrichtung nach einem oder mehreren der Ansprüche 1 bis 6, dadurch gekennzeichnet, daß mindestens eine Nut oder Rille in der Gegenelektrode oder im Gegenwerkzeug in lotrechter Richtung (berechnet bei geschlossenem Werkzeug) gegenüber dem zurückspringend angeodneten Schweißprofil angeordnet ist.

Fig.1

0 287 784